# EUROPÄISCHE PATENTSCHRIFT

(11) **EP 3 550 965 B1**
(45) Veröffentlichungstag und Bekanntmachung des Hinweises auf die Patenterteilung: **24.03.2021**
(21) Anmeldenummer: 17835805.7
(22) Anmeldetag: 30.11.2017
(51) Int. Cl.: A01M 29/28

(54) **VERFAHREN UND VORRICHTUNG ZUM BEEINFLUSSEN VON INSEKTEN**
METHOD AND DEVICE FOR INFLUENCING INSECTS
PROCÉDÉ ET DISPOSITIF POUR INFLUENCER DES INSECTES

(30) Priorität: 06.12.2016 CH 16062016
(43) Veröffentlichungstag der Anmeldung: 16.10.2019
(73) Patentinhaber: Nopixglobal AG, 8302 Kloten (CH)
(72) Erfinder: STOLL, Kurt, 8152 Glattbrugg (CH)
(74) Vertreter: IPrime Rentsch Kaelin AG
(86) Internationale Anmeldenummer: PCT/EP2017/080917
(87) Internationale Veröffentlichungsnummer: WO 2018/104135

(56) Entgegenhaltungen:
- WO-A1-2012/094768
- WO-A1-2016/165035
- US-A- 5 896 696
- US-A1- 2011 296 735
- US-A1- 2015 027 383

## Beschreibung

Die Erfindung bezieht sich auf ein Verfahren nach dem Oberbegriff des Anspruchs 1 und eine Vorrichtung nach dem Oberbegriff des Anspruchs 9 sowie ein Computerprogrammprodukt, welches die Durchführung eines Verfahrens nach dem Oberbegriff des Anspruchs 1 auf einer Vorrichtung nach dem Oberbegriff des Anspruchs 9 veranlasst.

Die vorliegende Erfindung betrifft insbesondere Verfahren und Vorrichtungen zum Beeinflussen von Stechmücken, vorzugsweise zum Reduzieren deren Stechaktivität.

Zum Reduzieren der Stichaktivität von Stechmücken werden verschiedene Lösungen angeboten, beispielsweise Insektizide, physikalische Schutzvorrichtungen wie Moskitonetze, auf die Haut oder die Kleider aufzutragende abstossende Mittel (Repellents) und Einrichtungen, welche Moskitos zu Fallen hin anziehen oder aus Bereichen abstossen.

WO 99/55151 A1 beschreibt eine Vorrichtung, welche mit zwei elektrischen Oszillatoren Schwingungen erzeugt, welche je über ein Kontaktplättchen auf die Haut einer sich damit schützenden Person übertragen werden. Die beiden getrennten Schwingungen werden mit 1.2 KHz und 64.0 KHz und einer maximalen Leistungsdichte von 1mW/cm² auf die Hautoberfläche übertragen und an mit der Haut kontaktierende Stechmücken abgegeben. Bei auf der Haut gelandeten Stechmücken sollen die von den Oszillatoren stammenden überlagerten Oberflächenwellen eine Störung und dann das Verlassen der Hautoberfläche bewirken. Wenn die Stechmücken direkt nach dem Landen schnell stechen oder wenn die Übertragung der Schwingungen auf die Hautoberfläche ungenügend stark ist, ist die Wirkung gegen Stiche nicht genügend gut.

WO 2012/094768 A1 beschreibt eine Vorrichtung, welche zwei Mikroprozessoren und zwei Sender umfasst. Eine gespeicherte Pulsform wird mit einer Trägerfrequenz von 565 KHz moduliert und über die beiden Sender und je daran angekoppelte Antennen in der Form von elektromagnetischen Wellen abgestrahlt. Mit Sendeleistungen von 5µW oder 1mW sollen die beiden zusammenwirkenden Sender Menschen in einem Umkreis von 2m bzw. 15m vor Mücken schützen. Versuche haben gezeigt, dass der Schutz nicht genügend gut ist.

WO 2016/165035 A1 beschreibt einen Zweikanal-Sender mit zwei Magnetantennen. Der Zweikanal-Sender umfasst einen Mikroprozessor, der ein Pulsfolge-Signal mit einem Puls mit einer Pulsbreite von 204ms und einer Pulspause von 5000ms erzeugt. Der Puls besteht aus drei Teilpulsen von 12ms Pulsbreite und zwei zwischen den Teilpulsen befindlichen Kurzpausen von 84ms. Aus dem Pulsfolge-Signal werden zwei Signale erzeugt, eines mit positiven und eines mit negativen Werten. Beide Signale werden mit der Modulationsfrequenz von 284 Hz moduliert und im zeitlichen Verlauf gegeneinander um 180 Grad phasenverschoben ausgelegt. Die beiden modulierten und phasenverschobenen Pulsfolge-Signale werden je einem Sender zugeleitet, welche Sender die Signale mit einer Trägerfrequenz von 160KHz und je einer Sendeleistung von 2mW je einer Magnetantenne zuführen. Die Modulation der beiden Pulsfolge-Signale mit einer Modulationsfrequenz und die anschliessende Erstellung von Sendesignalen mit einer von der Modulationsfrequenz abweichenden Trägerfrequenz ist aufwendig. Zudem müssen für die beiden Magnetantennen schon bei kleinen Sendeleistungen verhältnismässig hohe Ströme bereitgestellt werden.

Die Schriften US 2015/027383 A1, US 5 896 696 A und US 2011/296735 A1 beschreiben bekannte Verfahren und Vorrichtungen zum Beeinflussen von Insekten.

Die erfindungsgemässe Aufgabe besteht nun darin eine einfache Lösung zu finden, die mit einem möglichst kleinen Aufwand Insekten innerhalb eines genügend grossen Bereichs beeinflusst.

Die Aufgabe wird durch ein Verfahren mit den Merkmalen des Anspruches 1, durch eine Vorrichtung mit den Merkmalen des Anspruchs 9 und ein Computerprogrammprodukt mit den Merkmalen des Anspruchs 15 gelöst. Die abhängigen Ansprüche beschreiben alternative bzw. vorteilhafte Ausführungsvarianten, welche weitere Aufgaben lösen.

Bei einem erfinderischen Verfahren bzw. einer erfinderischen Vorrichtung zum Beeinflussen von Insekten mittels elektromagnetischer Strahlung wird von einem Sender ein zeitlicher Verlauf einer Antennenspeisung mit Pulsen erzeugt und über eine Antenne als elektromagnetische Strahlung mit entsprechenden Pulsen abgestrahlt. Die Antennenspeisung umfasst Bursts, bzw. Pakete oder Salven, von Pulsen, wobei der zeitliche Abstand zwischen direkt aufeinanderfolgenden Pulsen eines Bursts im Bereich von 5µs bis 9µs liegt und die zeitliche Ausdehnung des Bursts im Bereich von 1 bis 4ms .

Bei der Lösung der Aufgabe wurde erkannt, dass es für die Beeinflussung von Insekten mittels elektromagnetischer Strahlung wichtig ist, dass die Strahlung Bursts, bzw. Pakete oder Salven, von kurzzeitigen Pulsen umfasst. Bei den abgestrahlten kurzzeitigen Pulsen der Bursts muss der zeitliche Abstand zwischen direkt aufeinanderfolgenden Pulsen im Bereich von 5µs bis 9µs, vorzugsweise im Bereich von 5.8µs bis 7.7µs, insbesondere im Bereich von 6.0ps bis 7.3µs liegen. Die Pulse können als positive oder als negative Pulse ausgebildet sein, wobei die Pulse eines Bursts gleichartig ausgebildet sind, also entweder positiv oder negativ und im Wesentlichen mit der gleichen Pulshöhe. Damit die Pulse bei den Insekten eine Beeinflussung erzielen, muss jeder Burst eine Mindestzahl von Pulsen umfassen. Um die Beeinflussung zu verstärken, kann die Anzahl Pulse eines Burst und/oder die Anzahl von in kurzen zeitlichen Abständen abgestrahlten Bursts erhöht werden. Um keinen unnötig hohen Energieverbrauch zu bewirken wird die Anzahl der Pulse pro Burst und die Anzahl Burst pro Zeit nicht höher gewählt, als dies für die gewünschte Beeinflussung nötig ist.

Aus der Anzahl Pulse eines Burst und dem jeweiligen zeitliche Abstand zwischen direkt aufeinanderfolgenden Pulsen ergibt sich die zeitliche Ausdehnung des Bursts. Bei der Festlegung der Pulszahl pro Burst, bzw. der zeitlichen Ausdehnung eines Bursts, muss abhängig von der verwendeten Steuerung oder von den Komponenten der Schaltung, also auch beispielsweise bei Ein- und/oder Ausschwingvorgängen bzw. bei trägen Komponenten, sichergestellt werden, dass eine genügende Zahl wirksamer Pulse vorhanden ist. Vorzugsweise erreicht ein vorgegebener Anteil der Pulse eines Bursts eine vorgegebene Pulshöhe. Versuche haben gezeigt, dass es nötig ist, dass die zeitliche Ausdehnung jedes Bursts Bereich von 1ms bis 4ms liegt, wobei mit 2ms gute Resultate erzielt werden. Ein Burst von 2ms zeitlicher Ausdehnung würde dann beispielsweise 300 Pulse mit Abständen von 6.7µs umfassen. Versuche haben gezeigt, dass diese theoretische Pulszahl pro Burst bei Stechmücken sehr gute Resultate erzielt, selbst wenn Pulse am Anfang oder Ende der Bursts nicht wirksam sind.

Versuche haben ebenfalls gezeigt, dass es vorteilhaft ist, wenn die zeitlichen Abstände zwischen in kurzen Abständen direkt aufeinander folgenden Bursts mindestens 50ms betragen und vorzugsweise im Bereich von 70ms bis 100ms liegen sollen. Die Anzahl von in kurzen Abständen direkt aufeinander folgenden Bursts soll mindestens drei betragen, vorzugsweise aber im Bereich von drei bis zehn, insbesondere bei vier liegen. Der zeitliche Abstand zwischen direkt aufeinander folgenden Serien aus in kurzen Abständen aufeinanderfolgenden Bursts soll mindestens 1s betragen, vorzugsweise aber im Bereich von 1s bis 3s, insbesondere bei 2s liegen. Alle Pulse eines Bursts und einer Serie aus in kurzen Abständen aufeinander folgenden Bursts sind gleichartig positiv oder negativ ausgebildet. Um eine gegebenenfalls einschränkende dominante Ausrichtung der Pulse zu vermeiden, werden in einer besonderen Ausführungsform die Pulse einzelner Serien positiv und die Pulse anderer Serien negativ ausgerichtet, vorzugsweise von Serie zu Serie wechselnd.

Um die für die Beeinflussung der Insekten nötigen kurzzeitigen Pulse mit kleinem Aufwand so abstrahlen zu können, dass sie in einem einen Menschen umhüllenden Nahbereich eine für die Beeinflussung benötigte Intensität aufweisen, wird nur eine Antenne und nur ein Sender benötigt bzw. eingesetzt. Vorzugsweise wird eine Antenne in der Form einer Luftspule eingesetzt. Vorteilhaft ist eine im Print der Printplatte integrierte Antenne. Bei der Verwendung lediglich einer Antenne und insbesondere bei der Verwendung einer Luftspule, die bekanntlich eine kleine Induktivität aufweist, kann bereits mit kleiner elektrischer Leistung die nötige Beeinflussung von Insekten in einem einen Menschen umhüllenden Nahbereich erzielt werden. Die Strahlungsintensität kann so tief festgelegt werden, dass schädliche Wirkungen beim Menschen nicht beobachtet werden, wobei dies im Wesentlichen selbst für elektrosensible Personen zutrifft.

Das erfindungsgemässe Verfahren kann mit einer Vorrichtung durchgeführt werden, die lediglich einen kleinen Stromverbrauch hat und somit beispielsweise von einer gängigen Batterie oder einem gängigen Akku gespeist werden kann. Die Vorrichtung kann als Anhänger, Armband oder auch als Gerät, das beispielsweise in einem Kleidungsstück mitgetragen wird, ausgebildet sein. Gegebenenfalls wird ein Gerät von einem Computerprogrammprodukt zur Durchführung des erfindungsgemässen Verfahrens befähigt.

Es hat sich gezeigt, dass für die gewünschte Schutzwirkung die beeinflussten Insekten nicht in ihren Funktionen beeinträchtigt werden müssen, sondern dass sie aufgrund der Wahrnehmung der äusserst kurzzeitigen Pulse in einem an einen Menschen angepassten Bereich diesen Bereich meiden. Aufgrund der um eine Antenne in radialer Richtung entstehenden Intensitätsgradienten ist für Insekten eine auf die Antenne zuführende Bewegung direkt mit einer Zunahme der Wahrnehmungsintensität verbunden und eine wegführende Bewegung mit einer Abnahme. Die Insekten nehmen den Gradienten wahr und bewegen sich tendenziell so, dass bei ihnen die irritierende Wahrnehmung abnimmt.

Damit das Mittragen einer Vorrichtung zum Beeinflussen von Insekten nicht stört, wird diese Vorrichtung möglichst klein gebaut und beispielsweise als Armband getragen. Ein solches Armband umfasst ein stabiles und wasserdichtes Elektronik-Gehäuse und beispielsweise eine Ladebuchse oder ein Fotovoltaik-Ladeelement, sowie Anzeige- und gegebenenfalls Ein- und Ausschaltelemente bzw. EingabeElemente.

Die Elektronik bzw. Schaltung mit Antenne wird als Gesamtmodul aus möglichst wenigen Baugruppen aufgebaut. So kann beispielsweise ein Mikrokontroller einem Sender das nötige Steuersignal zuführen. Der Sender erzeugt vorzugsweise ein moduliertes Signal, insbesondere mittels Amplitudenmodulation, und verwendet dabei eine Trägerfrequenz im Bereich von 10MHz bis 24GHz, insbesondere von 300 bis 450 MHz, wobei 433MHz bezüglich Aktionsradius und Energiebedarf besonders geeignet ist. Die Ausgangsstufe des Senders umfasst einen Transistor, der das Antennensignal über seinen Kollektorausgang der Antenne zuleitet. Die Betriebsspannung wird beispielsweise von einer Li-Polymer Batterie geliefert, welche eine Schutz- und Überwachungselektronik umfasst. Zum Laden der Batterie wird ein Anschluss, beispielsweise eine Micro-USB Buchse 8, und ein Ladechip eingesetzt, wobei der Ladechip während des Ladevorganges die Batteriespannung überwacht und beim Erreichen der Vollladung den Ladevorgang abschaltet. Mit LEDs werden Information zum Betriebszustand und zur Batterie dargestellt. Zwischen der Batterie und dem Mikrokontroller sowie dem Sender und einer Seite der Antenne ist ein Spannungsstabilisator eingesetzt.

Als vorteilhafte Antenne wird beispielsweise eine Luftspule mit mindestens 40, insbesondere 85 Windungen verwendet, wobei die Windungen in einer Rechteckform um eine Spulenachse angeordnet sind. Vorzugsweise ist die Antenne im Print integriert und hat beispielsweise einen Innenwiderstand im Bereich von 0.05 - 0.3 Ohm. Die Rechteckseitenlängen sind an das Mass des Elektronik-Gehäuses bzw. an den Umfangsrand einer Printplatte mit der Elektronik angepasst und liegen im Bereich von 10mm bis 30mm, beispielsweise bei 17,3 mm und 26,0 mm. Der für die Luftspule verwendete Kupferdraht weist beispielsweise einen Durchmesser im Bereich von 0.04 bis 0.08 mm, insbesondere 0.06 mm und einen Innenwiderstand von 11 bis 30 Ohm, insbesondere 16 Ohm auf. Ein Ende der Luftspule ist an die Ausgangsstufe des Senders und das andere Ende an eine stabilisierte Systemspannung des Spannungsstabilisators angeschlossen. Die am Kollektor des Transistors gemessene Sendeleistung beträgt -2,286 dBm / 0,5907 mW, so dass ein wirksames elektromagnetisches Feld in einem Bereich von ca. 4m um das Armband entsteht.

Um möglicherweise störende Einflüsse der von der Antenne abgestrahlten elektromagnetische Strahlung auf die Elektronik bzw. Schaltung zu reduzieren, kann die Elektronik in einem metallischen, Masse bildenden Gehäuse angeordnet werden. Vorzugsweise wird die Antenne in einem minimalen Abstand dazu angeordnet, so dass sich die elektromagnetische Strahlung ungehindert ausbreiten kann. Bei einem Armband werden dazu beispielsweise ein metallisches Gehäuse mit der Elektronik und die Antenne in Armband-Umfangsrichtung gegeneinander versetzt angeordnet. Falls Baugruppen bzw. Komponenten der Elektronik, wie der Mikrokontroller, der Sender und der Spannungsstabilisator, oder Elemente dieser Baugruppen, wie ein Oszillator, ein Treiber oder ein Verstärker und Leitungen zwischen diesen Elementen voneinander und/oder von der Antenne abgeschirmt werden müssen, können diese in durch metallische Wänden abgeteilte Bereiche des metallischen Gehäuses eingesetzt werden. Die von der Batterie gelieferte Speisespannung wird gegebenenfalls mit Kondensatoren gegen von der Antenne und/oder von der Elektronik ausgehende Hochfrequenz-Einflüsse abgesichert.

Die Zeichnungen erläutern die Erfindung anhand eines Ausführungsbeispiels auf das sie aber nicht eingeschränkt ist. Dabei zeigen
- Fig. 1: eine perspektivische Darstellung eines Sendermoduls,
- Fig. 2: eine perspektivische Explosionsdarstellung eines Armbandes mit Sendermodul und Deckel,
- Fig. 3: eine schematische Darstellung des Aufbaus des Sendermoduls und,
- Fig. 4: ein Beispiel eines zeitlichen Verlaufs des Antennensignals.

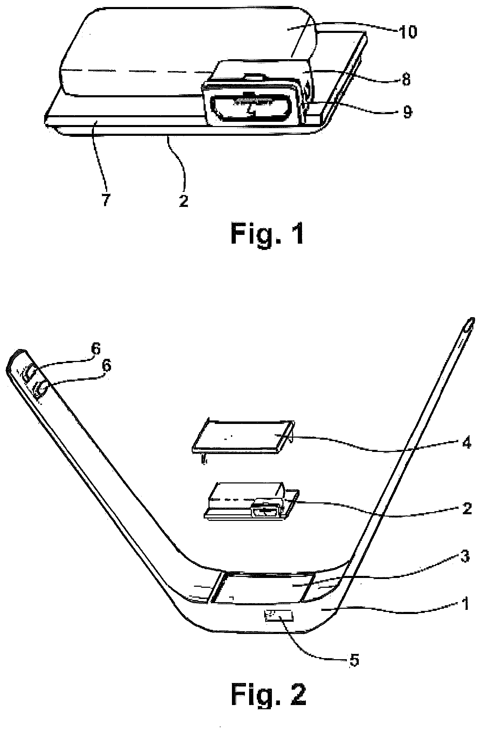

Fig. 1 zeigt ein Sendermodul 2 für ein in der Figur 2 dargestelltes Armband 1. Das Sendermodul 2 ist an einer Printplatte 7 angeordnet und umfasst eine Batterie 10, die über eine Buchse 8 gespeist werden kann. Damit die Buchse 8 dicht in eine Buchsenöffnung 5 des Armbands 1 eingesetzt werden kann, umfasst die Buchse 8 ein Dichtungselement 9. Gemäss Fig. 2 wird das Sendermodul 2 in ein Gehäuse 3 des Armbands 1 eingesetzt und dabei wird die Buchse 8 dichtend in die Buchsenöffnung 5 eingepresst. Anschliessend wird mit einem Deckel 4 das Gehäuse 3 dicht verschlossen. Am Armband 1 sind Schliesselemente 6 ausgebildet.

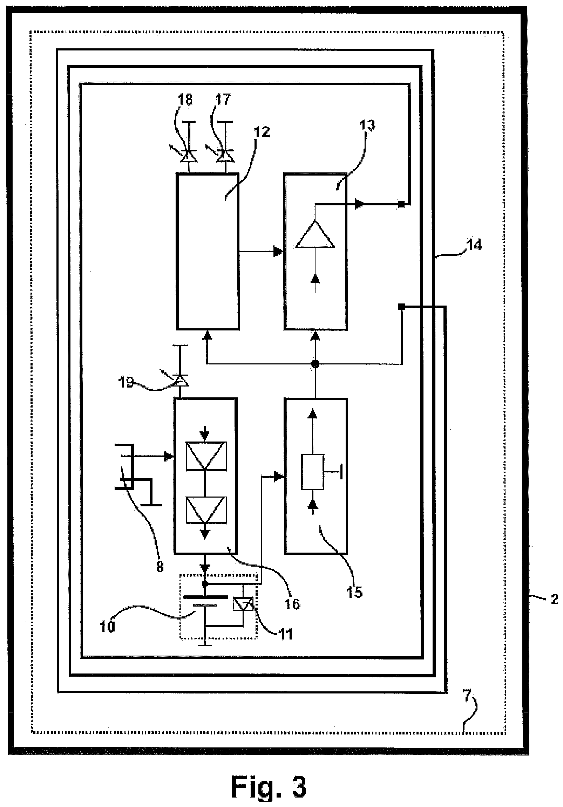

Fig. 3 zeigt den schematischen Aufbau des Sendermoduls 2, welches auf der Printplatte 7 aufgebaut ist. Das Sendermodul 2 umfasst einen Mikrokontroller 12, der einem Sender 13 das nötige Steuersignal zuführt. Der Sender 13 erzeugt vorzugsweise ein moduliertes Signal, insbesondere mittels Amplitudenmodulation, und verwendet dabei eine Trägerfrequenz im Bereich von 10MHz bis 24GHz, insbesondere von 300 bis 450 MHz, wobei 433MHz bezüglich Aktionsradius und Energiebedarf besonders geeignet ist. Die Ausgangsstufe des Senders 13 umfasst einen Transistor, der das Antennensignal über seinen Kollektorausgang einer Antenne 14 zuleitet. Die Betriebsspannung wird von einer Li-Polymer Batterie 10 geliefert, welche eine Schutz- und Überwachungselektronik 11 umfasst. Zum Laden der Batterie 10 wird die Buchse 8 und ein Ladechip 16 eingesetzt, wobei der Ladechip 16 während des Ladevorganges die Batteriespannung überwacht und beim Erreichen der Vollladung den Ladevorgang abschaltet. Mit LEDs 17, 18 und 19 werden Information zum Betriebszustand und zur Batterie dargestellt. Zwischen der Batterie 10 und dem Mikrokontroller 12 sowie dem Sender 13 und einer Seite der Antenne 14 ist ein Spannungsstabilisator 15 eingesetzt.

Die Antenne 14 ist als Luftspule mit 85 Windungen ausgebildet, wobei die Windungen in einer Rechteckform um eine Spulenachse angeordnet sind. Die Rechteckseitenlängen sind an das Mass des Elektronik-Gehäuses bzw. an den Umfangsrand einer Printplatte 7 angepasst und liegen beispielsweise bei 17,3 mm und 26,0 mm. Der für die Luftspule verwendete Kupferdraht weist beispielsweise einen Durchmesser von 0.06 mm und einen Innenwiderstand von 23,6 Ohm auf. Ein Ende der Luftspule oder der im Print integrierten, als Loop-Antenne ausgebildeten, Antenne ist an die Ausgangsstufe des Senders 13 und das andere Ende an eine stabilisierte Systemspannung des Spannungsstabilisators 15 angeschlossen.

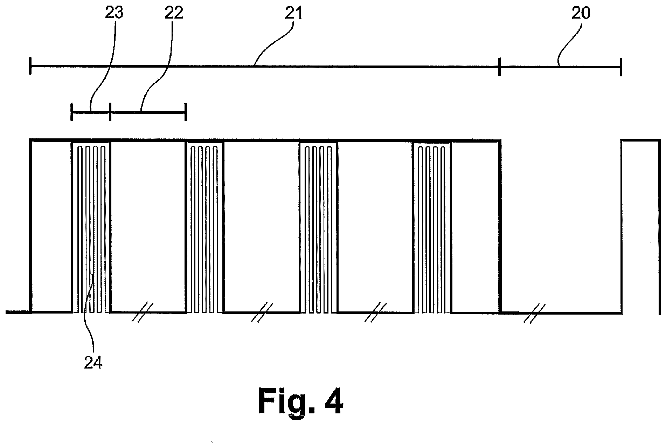

Fig. 4 zeigt schematisch ein Beispiel eines zeitlichen Verlaufs des Antennensignals mit Bursts 23, bzw. Paketen oder Salven, die je kurzzeitige Pulse 24 umfassen. Bei den Pulsen 24 jedes Bursts 23 liegt der zeitliche Abstand zwischen direkt aufeinanderfolgenden Pulsen 24 im Bereich von 5µs bis 9µs, vorzugsweise im Bereich von 5.8µs bis 7.7µs, insbesondere im Bereich von 6.0µs bis 7.3µs. Die Pulse 24 sind in der dargestellten Ausführung als positive Pulse 24 ausgebildet. Die Pulse 24 eines Bursts 23 sind gleichartig ausgebildet und weisen im Wesentlichen die gleiche Pulshöhe auf. Damit die Pulse 24 bei den Insekten eine Beeinflussung erzielen, muss jeder Burst 23 eine Mindestzahl von Pulsen 24 umfassen. Um die Beeinflussung zu verstärken, kann die Anzahl Pulse 24 eines Burst 23 und/oder die Anzahl von in kurzen zeitlichen Abständen abgestrahlten Bursts 23 erhöht werden.

Aus der Anzahl Pulse 24 eines Burst 23 und dem jeweiligen zeitliche Abstand zwischen direkt aufeinanderfolgenden Pulsen 24 ergibt sich die zeitliche Ausdehnung des Burst 23. Versuche haben gezeigt, dass es vorteilhaft ist, wenn die zeitliche Ausdehnung jedes Bursts 23 im Bereich von 1ms bis 4ms liegt, wobei mit 2ms gute Resultate erzielt werden. Bursts 23 von 2ms zeitlicher Ausdehnung mit Pulsen 24 mit Abständen von 6.7µs zeigen bei Stechmücken sehr gute Resultate.

In der dargestellten Ausführung betragen die kurzen zeitlichen Abstände 22 zwischen aufeinander folgenden Bursts 23 mindestens 50ms, vorzugsweise liegen sie im Bereich von 70ms bis 100ms. Die Anzahl von in kurzen Abständen aufeinander folgenden Bursts 23 soll mindestens zwei, insbesondere mindestens drei betragen. In der dargestellten Ausführung liegt diese Zahl bei vier. Der grosse zeitliche Abstand 20 zwischen aufeinander folgenden Serien aus in kurzen Abständen aufeinander folgenden Bursts 23 beträgt mindestens 1s, vorzugsweise liegt er im Bereich von 1s bis 3s, insbesondere bei 2s liegen. Die zeitliche Ausdehnung 21 entspricht der Zeit für die Bereitstellung einer Anzahl von in kürzeren Abständen aufeinander folgenden Bursts 21.

## Patentansprüche

1. Verfahren zum Beeinflussen von Insekten mittels elektromagnetischer Strahlung, bei welchem Verfahren von einem Sender (13) ein zeitlicher Verlauf einer Antennenspeisung mit Pulsen (24) erzeugt und über eine Antenne (14) als elektromagnetische Strahlung mit entsprechenden Pulsen abgestrahlt wird und die Antennenspeisung Bursts (23), bzw. Pakete oder Salven, von Pulsen (24) umfasst, wobei der zeitliche Abstand zwischen direkt aufeinanderfolgenden Pulsen (24) eines Bursts (23) im Bereich von 5 µs bis 9 µs liegt, **dadurch gekennzeichnet, dass** die zeitliche Ausdehnung der Bursts (23) im Bereich von 1 bis 4 ms liegt und alle Pulse (24) eines Bursts (23) sowie auch alle Pulse (24) einer Serie aus in kurzen Abständen aufeinander folgenden Bursts (23) gleichartig positiv oder negativ ausgebildet sind.

2. Verfahren nach Anspruch 1, **dadurch gekennzeichnet, dass** die zeitliche Ausdehnung der Bursts bei 2 ms, liegt.

3. Verfahren nach Anspruch 1, **dadurch gekennzeichnet, dass** die zeitliche Ausdehnung der Burst mindestens 3 ms eträgt.

4. Verfahren nach einem der Ansprüche 1 bis 3, **dadurch gekennzeichnet, dass** die zeitlichen Abstände zwischen in kurzen Abständen aufeinander folgenden Bursts (23) mindestens 50 ms betragen und vorzugsweise im Bereich von 70 ms bis 100 ms liegen.

5. Verfahren nach einem der Ansprüche 1 bis 4, **dadurch gekennzeichnet, dass** die Anzahl von in kurzen Abständen aufeinander folgenden Bursts (23) mindestens drei beträgt, vorzugsweise aber im Bereich von drei bis zehn, insbesondere bei vier liegt.

6. Verfahren nach einem der Ansprüche 1 bis 5, **dadurch gekennzeichnet, dass** der zeitliche Abstand zwischen aufeinander folgenden Serien aus in kurzen Abständen aufeinander folgenden Bursts (23) mindestens 1s beträgt, vorzugsweise aber im Bereich von 1 s bis 3 s, insbesondere bei 2 s liegt.

7. Verfahren nach einem der Ansprüche 1 bis 6, **dadurch gekennzeichnet, dass** ein vorgegebener Anteil der Pulse (24) eines Bursts (23) eine vorgegebene Pulshöhe erreicht.

8. Verfahren nach einem der Ansprüche 1 bis 7, **dadurch gekennzeichnet, dass** der Sender (13) ein moduliertes Signal erzeugt, vorzugsweise mittels Amplitudenmodulation, und dabei eine Trägerfrequenz im Bereich von 10 MHz bis 24 GHz, vorzugsweise von 300 bis 450 MHz, insbesondere von 433 MHz. verwendet.

9. Vorrichtung zum Beeinflussen von Insekten mittels elektromagnetischer Strahlung, mit einem Sender (13) und einer Antenne (14), wobei der Sender (13) einen zeitlichen Verlauf einer Antennenspeisung mit Pulsen (24) zu erzeugen und diesen über die Antenne (14) als elektromagnetische Strahlung mit entsprechenden Pulsen abzustrahlen eingerichtet ist, wobei der Sender (13) dazu eingerichtet ist, die Antennenspeisung mit Bursts (23), bzw. Paketen oder Salven, von Pulsen (24) zu erzeugen, und zwar so,
dass der zeitliche Abstand zwischen direkt aufeinanderfolgenden Pulsen (24) eines Bursts (23) im Bereich von 5 µs bis 9 µs liegt, **dadurch gekennzeichnet, dass**
die zeitliche Ausdehnung des Bursts (23) im Bereich von 1 bis 4 ms liegt und alle Pulse (24) eines Bursts (23) sowie auch alle Pulse (24) einer Serie aus in kurzen Abständen aufeinander folgenden Bursts (23) gleichartig positiv oder negativ ausgebildet sind.

10. Vorrichtung nach Anspruch 9, **dadurch gekennzeichnet, dass** die Antenne (14) im Print integriert ist oder in der Form einer Luftspule ausgebildet ist, welche vorzugsweise aus einem Kupferdraht mit einem Durchmesser im Bereich von 0.04 bis 0.08 mm und einen Innenwiderstand von 20 bis 30 Ohm besteht und wobei die Luftspule beispielsweise mindestens 40, insbesondere 85, Windungen umfasst, welche gegebenenfalls in einer Rechteckform insbesondere mit Seitenlängen im Bereich von 10 mm bis 30 mm ausgebildet sind.

11. Vorrichtung nach Anspruch 9 oder 10, **dadurch gekennzeichnet, dass** diese einen Mikrokontroller (12) umfasst, welcher dem Sender (13) ein Steuersignal zuführbar macht, wobei der Sender (13) vorzugsweise ein moduliertes Signal erzeugt, insbesondere mittels Amplitudenmodulation, und dabei eine Trägerfrequenz im Bereich von 10 MHz bis 24 GHz, vorzugsweise von 300 bis 450 MHz, insbesondere von 433 MHz, verwendet.

12. Vorrichtung nach einem der Ansprüche 9 bis 11, **dadurch gekennzeichnet, dass** der Sender (13) die Antennenspeisung so erzeugbar macht, dass die zeitlichen Abstände zwischen in kurzen Abständen aufeinander folgenden Bursts (23) mindestens 50 ms betragen und vorzugsweise im Bereich von 70 ms bis 100 ms liegen.

13. Vorrichtung nach einem der Ansprüche 9 bis 11, **dadurch gekennzeichnet, dass**
der Sender (13) die Antennenspeisung so erzeugbar macht, dass die Anzahl von in kurzen Abständen aufeinander folgenden Bursts (23) mindestens drei beträgt, vorzugsweise aber im Bereich von drei bis zehn, insbesondere bei vier liegt.

14. Vorrichtung nach einem der Ansprüche 9 I bis 13, **dadurch gekennzeichnet, dass**
der Sender (13) die Antennenspeisung so erzeugbar macht, dass der zeitliche Abstand zwischen aufeinander folgenden Serien aus in kurzen Abständen aufeinander folgenden Bursts mindestens 1s beträgt, vorzugsweise aber im Bereich von 1 s bis 3 s, insbesondere bei 2 s liegt.

15. Computerprogrammprodukt, welches die Durchführung eines Verfahrens nach einem der Ansprüche 1 bis 8 auf einer Vorrichtung nach einem der Ansprüche 9-14 veranlasst.

## Claims

1. Method for influencing insects by means of electromagnetic radiation, in which method a time-based course of an antenna supply with pulses (24) is generated by a transmitter (13) and is radiated via an antenna (14) as electromagnetic radiation with corresponding pulses and the antenna supply comprises bursts (23), or packets or salvoes, of pulses (24), wherein the time interval between directly successive pulses (24) of a burst (23) is in the range from 5 µs to 9 µs,
**characterised in that**
the time extension of the bursts (23) is in the range of 1 to 4 ms, and all pulses (24) of a burst (23) as well as all pulses (24) of a series of closely consecutive bursts (23) are formed of the same positive or negative type.

2. Method according to claim 1, **characterised in that** the time extension of the bursts is 2 ms.

3. Method according to claim 1, **characterised in that** the time extension of the burst is at least 3 ms.

4. Method according to any one of claims 1 to 3, **characterized in that** the time intervals between bursts following one another at short intervals are at least 50 ms and preferably lie in the range from 70 ms to 100 ms.

5. Method according to any one of claims 1 to 5, **characterized in that** the number of bursts (23) following one another at short intervals is at least three, but preferably in the range of three to ten, in particular four.

6. Method according to any one of claims 1 to 5, **characterised in that** the time interval between successive series of bursts (23) following one another at short intervals is at least 1 s, but preferably in the range from 1 s to 3 s, in particular 2 s.

7. Method according to any one of claims 1 to 6, **characterised in that** a predetermined proportion of the pulses (24) of a burst (23) reaches a predetermined pulse height.

8. Method according to any one of claims 1 to 7, **characterised in that** the transmitter (13) generates a modulated signal, preferably by means of amplitude modulation, using a carrier frequency in the range from 10 MHz to 24 GHz, preferably from 300 to 450 MHz, in particular from 433 MHz.

9. Device for influencing insects by means of electromagnetic radiation, having a transmitter (13) and an antenna (14), wherein the transmitter (13) is arranged to generate a time-based progression of an antenna supply with pulses (24) and to radiate this via the antenna (14) as electromagnetic radiation with corresponding pulses, wherein the transmitter (13) is arranged to generate the antenna supply with bursts (23), or packets or salvoes, of pulses (24), this in a manner that the time interval between directly successive pulses (24) of a burst (23) is in the range from 5 µs to 9 µs, **characterised in that** the time extension of a burst (23) is in the range of 1 to 4 ms and all pulses (24) of a burst (23) as well as all pulses (24) of a series of bursts (23) following one another at short intervals are formed of the same positive or negative type.

10. Device according to claim 9, **characterised in that** the antenna (14) is integrated in the print or is designed in the form of an air-core coil, which preferably consists of a copper wire with a diameter in the range from 0.04 to 0.08 mm and an internal resistance of 20 to 30 ohms and wherein the air-core coil comprises, for example, at least 40, in particular 85, turns, which are optionally formed in a rectangular shape, in particular with side lengths in the range from 10 mm to 30 mm.

11. Device according to any of claims 9 or 10, **characterised in that** it comprises a microcontroller (12), which makes a control signal supplyable to the transmitter (13), wherein the transmitter (13) preferably generates a modulated signal, in particular by means of amplitude modulation, using a carrier frequency in the range from 10 MHZ to 24 GHZ, preferably from 300 to 450 MHZ, in particular of 433 MHZ.

12. Device according to any one of claims 9 to 11, **characterised in that** the transmitter (13) makes the antenna supply producible in such a way that the time intervals between bursts (23) following one another at short intervals are at least 50 ms and preferably lie in the range from 70 ms to 100 ms.

13. Device according to any one of claims 9 to 11, **characterised in that** the transmitter (13) makes the antenna supply producible in such a way that the number of bursts (23) following one another at short intervals is at least three, but preferably in the range from three to ten, in particular four.

14. Device according to one of claims 9 to 13, **characterised in that** the transmitter (13) makes it possible to generate the antenna supply in such a way that the time interval between successive series of bursts (23) following one another at short intervals is at least 1 s, but preferably lies in the range from 1 s to 3 s, in particular at 2 s.

15. Computer program product, which causes a method according to one of claims 1 to 8 to be performed on a device according to one of claims 9 to 14.

## Revendications

1. Procédé permettant d'influencer des insectes au moyen d'un rayonnement électromagnétique, dans lequel procédé une variation dans le temps d'une alimentation d'antenne avec des impulsions (24) est générée par un émetteur (13) et émise par une antenne (14) sous la forme d'un rayonnement électromagnétique ayant les impulsions correspondantes, et l'alimentation d'antenne comprend des rafales (23), ou des paquets ou des salves, d'impulsions (24), l'intervalle de temps entre des impulsions (24) d'une rafale (23) qui se suivent directement étant compris dans la plage de 5 µs à 9 µs, **caractérisé en ce que** la durée des rafales (23) est située dans la plage de 1 à 4 ms, et toutes les impulsions (24) d'une rafale (23), ainsi que toutes les impulsions (24) d'une série de rafales (23) qui se suivent à intervalles rapprochés sont réalisées de la même manière positive ou négative.

2. Procédé selon la revendication 1, **caractérisé en ce que** la durée des rafales est égale à 2 ms.

3. Procédé selon la revendication 1, **caractérisé en ce que** la durée des rafales est au moins égale à 3 ms.

4. Procédé selon l'une quelconque des revendications 1 à 3, **caractérisé en ce que** les intervalles de temps entre des rafales (23) qui se suivent à intervalles rapprochés durent au moins 50 ms et se situent de préférence dans la plage de 70 ms à 100 ms.

5. Procédé selon l'une quelconque des revendications 1 à 4, **caractérisé en ce que** le nombre des rafales (23) qui se suivent à intervalles rapprochés, est au moins égal à trois, mais se situe de préférence dans la plage de trois à dix, étant en particulier égal à quatre.

6. Procédé selon l'une quelconque des revendications 1 à 5, **caractérisé en ce que** l'intervalle de temps entre des séries consécutives de rafales (23) qui se suivent à intervalles rapprochés dure au moins 1 s, mais se situe de préférence dans la plage de 1 s à 3 s, étant en particulier égal à 2 s.

7. Procédé selon l'une quelconque des revendications 1 à 6, **caractérisé en ce qu'**une partie prédéfinie des impulsions (24) d'une rafale (23) atteint une hauteur d'impulsion prédéfinie.

8. Procédé selon l'une quelconque des revendications 1 à 7, **caractérisé en ce que** l'émetteur (13) génère un signal modulé, de préférence au moyen d'une modulation d'amplitude, en utilisant une fréquence porteuse dans la plage de 10 MHz à 24 GHz, de préférence de 300 à 450 MHz, en particulier égale à 433 MHz.

9. Dispositif permettant d'influencer des insectes au moyen d'un rayonnement électromagnétique, comprenant un émetteur (13) et une antenne (14), l'émetteur (13) étant aménagé pour générer une variation dans le temps d'une alimentation d'antenne avec des impulsions (24) et pour l'émettre par l'antenne (14) sous la forme d'un rayonnement électromagnétique ayant des impulsions correspondantes, l'émetteur (13) étant aménagé pour générer l'alimentation d'antenne avec des rafales (23), ou des paquets ou des salves, d'impulsions (24), et notamment de telle sorte que l'intervalle de temps entre des impulsions (24) d'une rafale qui se suivent directement est situé dans la plage de 5 µs à 9 µs,
**caractérisé en ce que**
la durée de la rafale (23) est située dans la plage de 1 à 4 ms, et toutes les impulsions (24) d'une rafale (23), ainsi que toutes les impulsions (24) d'une série de rafales (23) qui se suivent à intervalles rapprochés, sont réalisées de la même manière positive ou négative.

10. Dispositif selon la revendication 9, **caractérisé en ce que** l'antenne (14) est intégrée dans la plaquette de circuits imprimés ou est réalisée sous la forme d'une bobine à air qui se compose de préférence d'un fil de cuivre ayant un diamètre compris dans la plage de 0,04 à 0,08 mm et une résistance interne de 20 à 30 ohm, et dans lequel la bobine à air comprend par exemple au moins 40, en particulier 85, enroulements, qui sont réalisés le cas échéant sous une forme rectangulaire, en particulier ayant des longueurs latérales comprises dans la plage de 10 mm à 30 mm.

11. Dispositif selon la revendication 9 ou 10, **caractérisé en ce qu'**il comprend un microcontrôleur (12) qui permet d'amener un signal de commande à l'émetteur (13), l'émetteur (13) générant de préférence un signal modulé, en particulier par modulation d'amplitude, en utilisant une fréquence porteuse comprise dans la plage de 10 MHz à 24 GHz, de préférence de 300 à 450 MHz, en particulier égale à 433 MHz.

12. Dispositif selon l'une quelconque des revendications 9 à 11, **caractérisé en ce que** l'émetteur (13) permet de générer l'alimentation d'antenne de telle sorte que les intervalles de temps entre des rafales (23) qui se suivent à intervalles rapprochés durent au moins 50 ms, et se situent de préférence dans la plage de 70 ms à 100 ms.

13. Dispositif selon l'une quelconque des revendications 9 à 11, **caractérisé en ce que** l'émetteur (13) permet de générer l'alimentation d'antenne de telle sorte que le nombre de rafales (23) qui se suivent à intervalles rapprochés est au moins égal à trois, mais se situe de préférence dans la plage de trois à dix, en étant en particulier égal à quatre.

14. Dispositif selon l'une quelconque des revendications 9 à 13, **caractérisé en ce que** l'émetteur (13) permet de générer l'alimentation d'antenne de telle sorte que l'intervalle de temps entre des séries consécutives de rafales qui se suivent à intervalles rapprochés dure 1 s, mais se situe de préférence dans la plage de 1 s à 3 s, en étant en particulier égal à 2 s.

15. Produit de programme informatique qui provoque l'exécution d'un procédé selon l'une quelconque des revendications 1 à 8 sur un dispositif selon l'une quelconque des revendications 9 à 14.
